Europäisches Patentamt

European Patent Office

Office européen des brevets

(19)

(11) Publication number: **0 109 504**
**A2**

## (12) EUROPEAN PATENT APPLICATION

(21) Application number: **83109328.1**

(22) Date of filing: **20.09.83**

(51) Int. Cl.³: **G 06 F 13/00**

(30) Priority: **18.11.82 US 442820**

(43) Date of publication of application:
**30.05.84 Bulletin 84/22**

(84) Designated Contracting States: –
**DE FR GB**

(71) Applicant: International Business Machines Corporation
Old Orchard Road
Armonk, N.Y. 10504(US)

(72) Inventor: Piazza, William Joseph
9742 S.W. 1st Place
Boca Raton Florida 33433(US)

(74) Representative: Bonneau, Gérard
Compagnie IBM France Département de Propriété
Industrielle
F-06610 La Gaude(FR)

(54) Protection system for storage and input/output facilities and the like.

(57) Protection system associated with a device (11), responsive to a selected status signal and to a predetermined sub-range of address signals (6) from a microprocessor (1) to supply a protection gating signal (9) when a particular sub-range of address signals (6) is supplied by the microprocessor (1) to allow access to the device (11) whose address correctly corresponds to the particular sub-range of address signals (6). This system may be applied to a variety of storage facilities such as random access memories or programmable read only memories.

FIG. I

## PROTECTION SYSTEM FOR STORAGE AND INPUT/OUTPUT
## FACILITIES AND THE LIKE

This invention relates to protection circuitry for data processing systems and more particularly to a protection system for preventing a storage facility or input/output ports from being altered except by authorized users.

Systems of this nature have been described heretofore wherein protection circuitry has been provided for storage facilities and the like. Thus, US Patent 4,183,085 describes a system for protection against use of unauthorized programs which includes data storage divided into secure storage and free storage sections. Operation of output units, such as display units, by output instructions is enabled from secure storage but prevented from free storage. In other systems, the access to unauthorized sections of storage is prevented such as in US patent 4, 184, 201, or specific storage areas are made available only through access keys such as in US patent 4, 038, 645.

The primary objective of the present invention is to provide protection circuitry that operates in an effective manner with a minimum of circuit components.

In accordance with the present invention, a protection system is provided for preventing a protected device such as a storage facility or input/output ports from being altered except through authorized software and particularly in conjunction with microprocessor- based systems.

The protection system of the present invention comprises address detection means associated with each protected device and being responsive to a selected status signal and to predetermined address signals from the microprocessor decode means for detecting output signals from the address detection means and for supplying a protection gating signal when a particular range of address signals is supplied to the address detection means by this microprocessor as evidenced by output signals from the address detection means, and enabling means responsive to a normal enabling signal and to the protection gating signal from the decode means for supplying a signal to allow access to the device whose address correctly corresponds to a particular address provided by the microprocessor.

The principles of the invention are applicable to a variety of protection environments including random access memory or programmable read only memory, for example.

For a better understanding of the present invention, together with other and further advantages and features thereof, reference is made to the description taken in connection with the accompanying drawings.

Fig. 1 is a generalized system diagram of the protection feature applied to a microprocessor system including a protected device.

Fig. 2 illustrates the application of the inventive protection feature to a programmable read only memory.

Fig. 3 is a diagram of the application of the protection feature to a selected microprocessor system environment.

The following abbreviations are occasionally used herein:

| Abbreviation | Definition |
| --- | --- |
| A | And circuit |
| ALE | "Address Latch Enable". A representative microprocessor exerts this line to indicate that a valid, usable address is |

available on the address bus.

CE                      Chip enable

CPU                     Central Processing Unit

CS                      Chip select

IO/M or IO/M̄           IO or Memory.  An active signal
                        on this line directs READ and
                        WRITE operations to IO devices.
                        Otherwise, they are directed to
                        memory.

OP CODE FETCH           The portion of a computer's
                        timing cycle during which it
                        is "fetching" or reading an operation code

74LS00                  A commonly used 2 input positive
                        NAND gate in the 74LSXX series
                        of logic devices.

74LS02                  A 2 input positive NOR gate in
                        in the 74LSXX series.

74LS08                  A 2 input positive AND gate in
                        the 74LSXX series.

74LS42                  A 4 line to 10 line decoder in
                        the 74LSXX series.

74LS175                 A D type flip flop in the
                        74LSXX series.

It is desirable to protect storage or input/output (I/O)
ports in a microprocessor based system, for example, from
being changed in an unauthorized manner.  Many systems have multiple users and it is important to prevent access of users to selected areas of the system. For instance, a particular piece of software may be maintaining a table in storage. A casual or accidental change in the table may cause the program to crash or produce other undesirable results.

The protection circuitry described herein allows a particular range of memory addresses to be set up as a "window" characterized as a memory map into which authorized software must fit before it will be allowed to modify a particular area that needs protection. A system description of the technique will be presented hereafter.

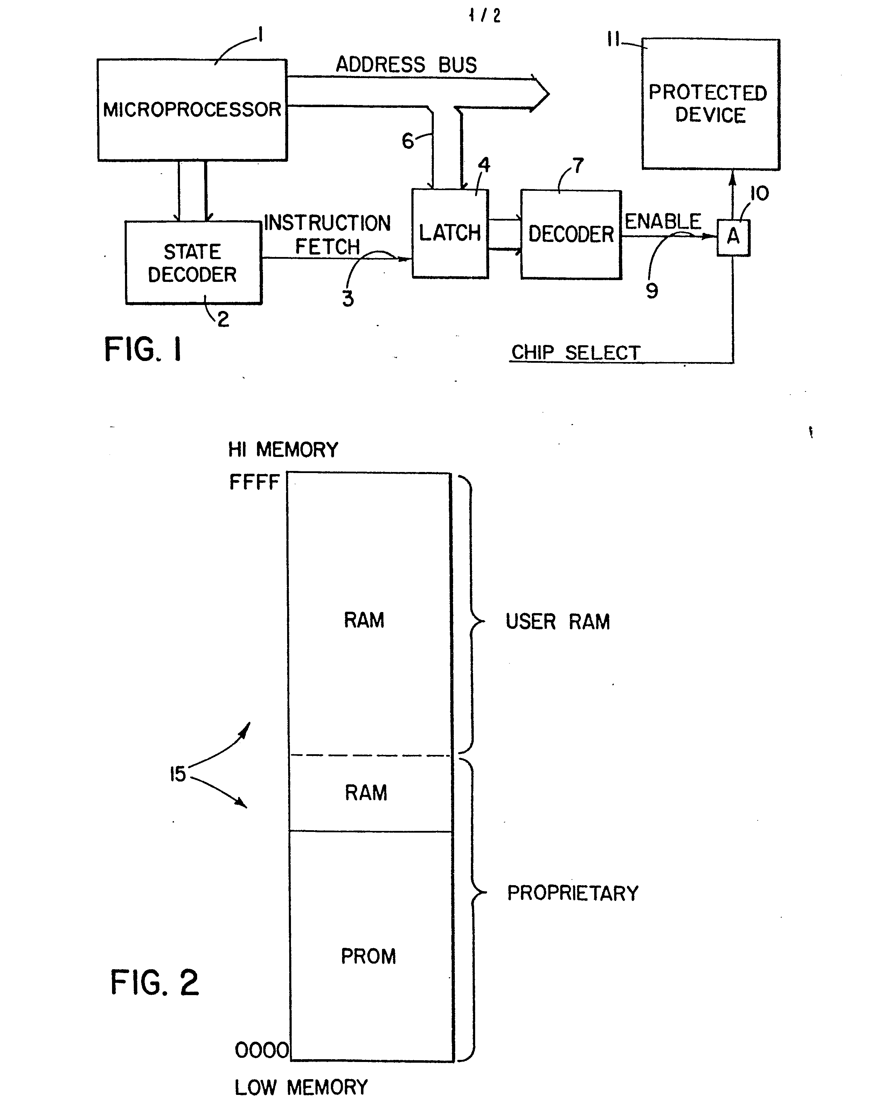

Most microprocessors such as microprocessor 1, Fig. 1, allow external circuitry such as state decoder 2 to decode their "state". It is possible to detect the moment that the microprocessor is performing its "instruction fetch" evidenced by a signal on line 3 and to store the address from which the instruction is being fetched by way of a latch circuit 4. The address, derived from bus 6, is then decoded by decoder 7 and used in making a decision as to whether or not other devices in the system should be enabled.

The circuit shown in Fig. 1 can be designed so that latch 4 always captures the address from which an instruction is fetched and decoder 7 produces an active "enable" signal via line 9 to And gate 10 only if this address is in the range X'0000' to X'0FFF' or some other range of addresses which is appropriate for the application. A program running at location X'0500' would thus be allowed to alter the protected device 11 which may be a storage facility, input/output or other device. A program running at X'7000', however, would not be allowed to change the protected device. The program at X'7000' is forced to call the routine at X'0500' to alter the device, and this gives control over how it is changed.

The storage map protection circuit described can be used to implement "Execute Only" storage, i.e. storage, which can be

neither written to nor read from, but which contains machine instructions that will execute properly.

A piece of proprietary software may be burned into a Read Only memory and become a part of a machine to be made available to the public. A memory map of the storage designated 15 is shown in Fig. 2 and includes User RAM and Proprietary RAM and PROM. If left unprotected, a user can write a program and place it in User RAM which would read the PROM, possibly for the purpose of copying it. However, if the storage map protection circuit is used to protect the PROM (plus some RAM that the program in the PROM may need), nothing the user can do in software will allow him to copy the PROM.

The system thus has the following features:

1. Users are prevented from reading or writing the proprietary software in PROM.

2. The program stored in the PROM has complete access to all available memory, including tables of data which may be stored in the PROM.

3. It is possible to select certain software routines in the PROM which users are allowed to use and to document their use, for example, inputs and entry points. Programs in user RAM can call these routines and execute them, even though they are in protected storage. But it would only be possible to do this to properly documented routines. Aside from these, the user has no method of determining what is in the PROM.

Therefore, the memory map protection circuit protects the area of memory marked "Proprietary" so that programs in user RAM cannot copy the contents of the PROM.

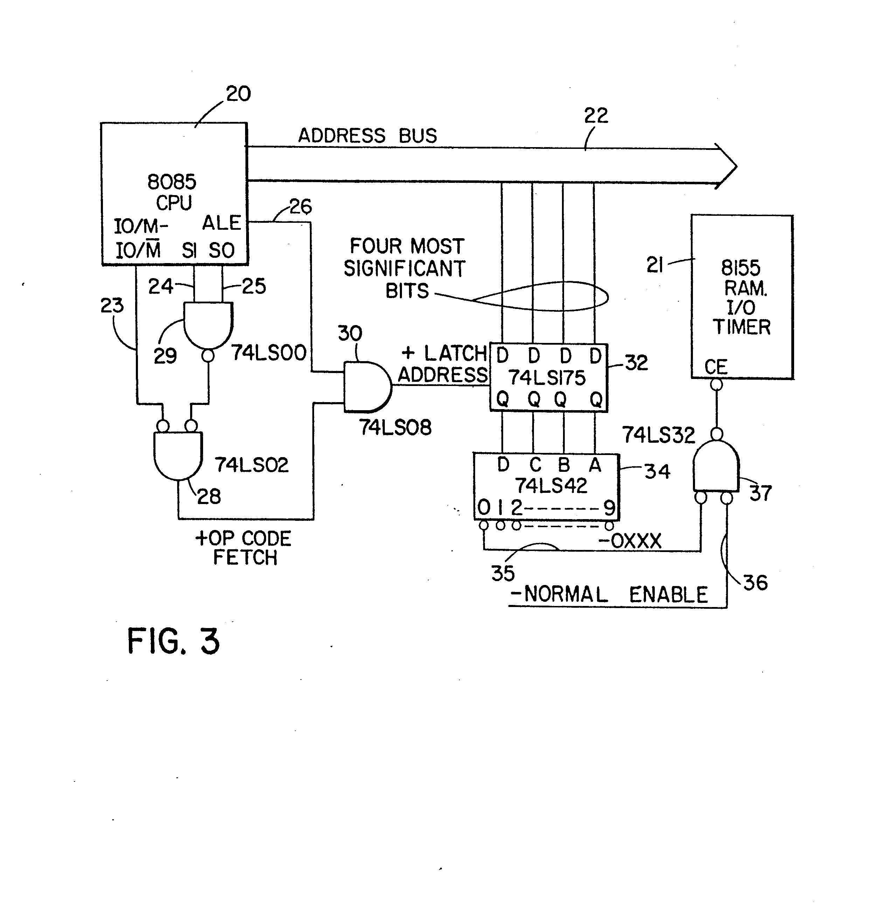

Fig. 3 shows how the storage map protection circuit can be used to protect a selected microprocessor-based system such as an Intel microcomputer system. (Intel is a registered trademark of Intel Corporation, Santa Clara, California). The system utilizes an 8085 Central Processing Unit (CPU) 20 and an 8155 Random Access Memory (RAM) unit 21 with I/O ports and timer, for example. Intel microcomputer systems such as that shown are extensively used in computer applications today and are well known in the art.

CPU 20 drives an address bus 22 and provides various other output signals IO/M or IO/$\overline{M}$ on line 23, S1 on line 24, S0 on line 25 and ALE on line 26. These lines serve as inputs to logic blocks such as Negated input And block 28, Nand block 29, and And block 30. The significance of lines 23 through 26 and operation of blocks 28, 29 and 30 is set forth below.

S0, S1, and IO/M (lines 25, 24, and 23, respectively) are provided by the Intel 8085 microprocessor as a method of determining the "internal state" of the microprocessor. In particular, for the state where IO/M = 0, S0 = 1, and S1 = 1, the microprocessor is "fetching" an instruction Op code from memory.

The ALE signal on line 26 is also provided by the Intel 8085 microprocessor as a method of determining whether or not the data on the address bus is valid. When ALE = 1, the address on the bus is usable.

Blocks 28 and 29 gate together IO/M, S0, and S1 to create a signal which indicates that an "Op code fetch" is being performed. When this signal line is then gated (via block 30) with the ALE signal (line 26), the result is a signal which says, in effect, "a valid address is on the bus and an Op code will be fetched from that location".

The protection circuitry set forth herein is effective to protect the 8155 RAM and I/O module and the 8085 based system from being altered, except by an instruction which is fetched from a particular address range, for example, the address range X'0000' to X'0FFF'. The fourmost significant bits of the address bus are latched in latch circuit 32 during Op Code fetch evidenced by blocks 28 and 30. Outputs of latch circuit 32 are decoded by the 74LS42 decoder block 34. If all inputs are zero, the -0XXX line 35 goes active and allows the -Normal Enable line 36 to reach the 8155 module 21 via And circuit 37. Otherwise, module 21 is not enabled.

While a preferred embodiment of the invention has been illustrated and described, it is to be understood that there is no intention to limit the invention to the precise construction herein disclosed and the right is reserved to all changes and modifications coming within the scope of the invention as defined in the appended claims.

## CLAIMS

1.  A protection system for a data processing system and associated devices (11,21) comprising a central processing unit, which provides address signals indicative of particular device addresses, and status signals indicative of states of said central processing unit; said protection system being characterized in that it comprises :

    address detection means associated with each device in said system, and being responsive to a selected status signal and to predetermined address signals from said central processing unit;

    decode means (34) for detecting output signals from said address detection means and for supplying a protection gating signal (35) when a particular range of address signals is supplied to said address detection means by said central processing unit as evidenced by output signals from said address detection means; and

    enabling means (37) responsive to a normal enabling signal (36) in said system and to the protection gating signal from said decode means for supplying a signal to allow access to the device whose address correctly corresponds to a particular address provided by said central processing unit.

2.  The protection system according to Claim 1 wherein said central processing unit (1,20) is a microprocessor.

3.  The protection system according to Claim 1 or 2 wherein said devices are storage units (21).

4.  The protection system according to Claim 3 wherein said devices (11) include input/output ports.

5. The protection system according to Claim 3 or 4 wherein a protected device (21) is a random access storage unit.

6. The protection system according to Claim 3 or 4 wherein a protected device (21) is a programmable read only storage unit.

7. The protection system according to any one of the preceding claims further comprising latch means (4,32) associated with each device in said system, and being responsive to a signal (3) indicative of a selected state of said central processing unit (1,20) and to predetermined address signals (6) from said central processing unit to supply latch output signals;

   enabling means responsive to a normal enabling signal in said system and to the protection gating signal from said latch decode means, for supplying an enabling signal to allow access to the device whose address correctly corresponds to a particular address provided by said central processing unit.

8. The system according to Claim 7 wherein said signal (3) indicative of a selected state controlling status of said central processing unit (1,20) is an instruction fetch signal.

FIG. I

FIG. 2

FIG. 3